# EUROPEAN PATENT APPLICATION

(11) **EP 3 125 164 A1**
(43) Date of publication of application: **01.02.2017**
(21) Application number: 16179246.0
(22) Date of filing: 13.07.2016
(51) Int. Cl.: G06Q 10/02, G06Q 50/10

(54) **METHOD AND DEVICE FOR PRESENTING TICKET INFORMATION**

(30) Priority: 31.07.2015 CN 201510463427
(71) Applicant: Xiaomi Inc., Beijing 100085 (CN)
(72) Inventor: JIANG, Dongya, BEIJING, 100085 (CN); ZHAO, Jiankai, BEIJING, 100085 (CN); ZHAO, Zhenhai, BEIJING, 100085 (CN)
(74) Representative: Underwood, Nicolas Patrick

(57) **Abstract**

The present disclosure relates to a method and device for presenting ticket information capable of providing more diversifying presentation of ticket information. The method includes: receiving (S101) an instant message; and if the instant message includes ticket information, presenting (S102) the ticket information in the form of a multimedia card. The technical solutions of the present disclosure can visually present the ticket information. Thus, the presentation of ticket information becomes more colorful and the presentation of instant message is more diversifying. Consequently, users can enjoy visual beauty.

## Description

### TECHNICAL FIELD

The present disclosure generally relates to the Internet technical field, and more particularly, to a method and device for presenting ticket information.

### BACKGROUND

With the proliferation of online group shopping, buying movie tickets on online group-buying platforms becomes a popular movie ticket booking manner preferred by many customers because of its cheap prices. After a customer purchases a movie ticket via online group-buying, a short message application (APP) on a smart mobile phone of the customer will receive short message notifications from a network platform, and the customer may go to a movie theater to get a real movie ticket by a verification code in the short message notifications. In related arts, the short message notifications are given in a text form, and information such as the verification code of the movie ticket and the showtime of the movie are highlighted. However, the short message application cannot give a visual presentation of relevant information to the movie, and thus the short message notification makes the presentation of the movie information monotonous.

### SUMMARY

In order to address the issues in related arts, embodiments of the present disclosure provide a method and a device for presenting ticket information capable of providing more diversifying presentation of ticket information.

According to a first aspect of embodiments of the present disclosure, there is provided a method for presenting ticket information, including:
receiving an instant message; and
if the instant message includes ticket information, presenting the ticket information in the form of a multimedia card.

In an embodiment, presenting the ticket information in the form of a multimedia card may include:
searching a poster relating to the ticket information via a network interface;
determining a ticket title and seat information in the ticket information which is included in the instant message; and
presenting the poster, the ticket title and the seat information on a short message list in the form of the multimedia card.

By the multimedia card, a user may visually view instant messages from an e-commerce platform.

In an embodiment, the method may further include:
monitoring whether there is a trigger event on the multimedia card;
if the trigger event is monitored, searching relevant information to the ticket information via a network interface; and
presenting the relevant information on the multimedia card.

By searching relevant information to the ticket information via a network interface of a terminal device and presenting the relevant information on the multimedia card, more useful information is presented on the multimedia card. Thus, a user may know some necessary information relevant to the ticket information in advance, the user does not need to get the relevant information by manual searching on network and thereby user experience is improved.

In an embodiment, the method may further include:
determining an e-commerce platform providing the ticket information from the instant message;
determining a short message template corresponding to the e-commerce platform from a template database, wherein the template database is configured to record short message templates of e-commerce platforms providing ticket information; and
determining whether there is the ticket information in the instant message according to the short message template.

By making statistics on short message templates corresponding to different e-commerce platforms and storing the short message templates in the template database, the identifying of the instant message becomes more accurate.

In an embodiment, determining an e-commerce platform providing the ticket information from the instant message may include:
determining a first keyword in the instant message;
determining whether the first keyword is stored in a first database, wherein the first database is configured to record enterprise names corresponding to keywords; and
if the first keyword is stored in the first database, determining an enterprise name recorded in the first database which is consistent with the first keyword as the e-commerce platform providing the ticket information.

The e-commerce platform sending the instant message is identified by the first keyword, and thus when the first database is updated continuously, the identifying by the first keyword will become more accurate.

In an embodiment, determining an e-commerce platform providing the ticket information from the instant message may include:
determining a short message number sending the instant message;
determining whether the short message number is stored in a number database, wherein the number database is configured to record fixed numbers of enterprises and enterprise names corresponding to the fixed numbers; and
if the short message number is stored in the number database, determining the e-commerce platform providing the ticket information in accordance with an enterprise name recorded in the number database which is corresponding to the short message number.

Because the number database may be continuously updated in accordance with the short message numbers of enterprises, the number database can ensure more accurate identifying of the short message numbers.

In an embodiment, the method may further include:
determining whether there is a short message template corresponding to the e-commerce platform stored in the template database;
if there is a short message template corresponding to the e-commerce platform stored in the template database, performing determining of the short message template corresponding to the e-commerce platform from the template database; and
if there is no short message template corresponding to the e-commerce platform stored in the template database, updating the short message template corresponding to the e-commerce platform into the template database.

By updating the short message template into the template database, a terminal device may more accurately and comprehensively identify the instant message.

In an embodiment, the method may further include:
determining a second keyword representing the ticket information from the instant message;
determining whether the second keyword is stored in a second database, wherein the second database is configured to record keywords included in ticket information; and
if the second keyword is stored in the second database, determining that the instant message includes the ticket information.

Determining whether the ticket information is included by the second database can make identifying of keywords more accurate and efficient.

According to a second aspect of embodiments of the present disclosure, there is provided a device for presenting ticket information, including:
a receiving module configured to receive an instant message; and
a first presenting module configured to, if the instant message received by the receiving module includes ticket information, present the ticket information in the form of a multimedia card.

In an embodiment, the first presenting module includes:
a searching submodule configured to search a poster relating to the ticket information via a network interface;
a first determining submodule configured to determine a ticket title and seat information in the ticket information which is included in the instant message; and
a presenting submodule configured to present the poster found by the searching submodule, the ticket title and the seat information determined by the first determining submodule on a short message list in the form of the multimedia card.

In an embodiment, the device may further include:
a monitoring module configured to monitor whether there is a trigger event on the multimedia card presented by the first presenting module;
a searching module configured to, if the trigger event is monitored by the monitoring module, search relevant information to the ticket information via a network interface; and
a second presenting module configured to present the relevant information found by the searching module on the multimedia card.

In an embodiment, the device may further include:
a first determining module configured to determine an e-commerce platform providing the ticket information from the instant message received by the receiving module;
a second determining module configured to determine a short message template corresponding to the e-commerce platform determined by the first determining module from a template database, wherein the template database is configured to record short message templates of e-commerce platforms providing ticket information; and
a third determining module configured to determine whether there is the ticket information in the instant message according to the short message template determined by the second determining module.

In an embodiment, the first determining module may include:
a second determining submodule configured to determine a first keyword in the instant message;
a third determining submodule configured to determine whether the first keyword determined by the second determining submodule is stored in a first database, wherein the first database is configured to record enterprise names corresponding to keywords; and
a fourth determining submodule configured to, if the third determining submodule determines that the first keyword is stored in the first database, determine an enterprise name recorded in the first database which is consistent with the first keyword as the e-commerce platform providing the ticket information.

In an embodiment, the first determining module may include:
a fifth determining submodule configured to determine a short message number sending the instant message;
a sixth determining submodule configured to determine whether the short message number determined by the fifth determining submodule is stored in a number database, wherein the number database is configured to record fixed numbers of enterprises and enterprise names corresponding to the fixed numbers; and
a seventh determining submodule configured to, if the sixth determining submodule determines that the short message number is stored in the number database, determine the e-commerce platform providing the ticket information in accordance with an enterprise name recorded in the number database which is corresponding to the short message number.

In an embodiment, the device may further include:
a fourth determining module configured to determine whether there is a short message template corresponding to the e-commerce platform stored in the template database;
wherein if the fourth determining module determines that there is a short message template corresponding to the e-commerce platform stored in the template database, the second determining module performs determining of the short message template corresponding to the e-commerce platform from the template database; and
an updating module configured to, if the fourth determining module determines that there is no short message template corresponding to the e-commerce platform stored in the template database, update the short message template corresponding to the e-commerce platform into the template database.

In an embodiment, the device may further include:
a fifth determining module configured to determine a second keyword representing the ticket information from the instant message;
a sixth determining module configured to determine whether the second keyword determined by the fifth determining module is stored in a second database, wherein the second database is configured to record keywords included in ticket information; and
a seventh determining module configured to, if the sixth determining module determines that the second keyword is stored in the second database, determine that the instant message includes the ticket information.

According to a third aspect of embodiments of the present disclosure, there is provided a device for presenting ticket information, including:
a processor; and
a memory for storing instructions executable by the processor;
wherein the processor is configured to:
receive an instant message; and
if the instant message includes ticket information, present the ticket information in the form of a multimedia card.

In one particular embodiment, the steps of the method for operating a television application are determined by computer program instructions.

Consequently, according to a fourth aspect, the invention is also directed to a computer program as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the information medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.The technical solutions provided by the embodiments of the present disclosure may have the following advantageous effects:
If an instant message received by a terminal device includes ticket information, the ticket information is presented on a short message list in the form of a multimedia card. Thus, the ticket information is presented visually, the presentation of instant message is more diversifying and the presentation of ticket information becomes more colorful. Consequently, users can enjoy visual beauty.

It is to be understood that both the foregoing general description and the following detailed description are exemplary and explanatory only and are not restrictive of the present disclosure, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1A is a flowchart showing a method for presenting ticket information according to an exemplary embodiment.
Fig. 1B is a schematic diagram showing a multimedia card according to an exemplary embodiment.
Fig. 2A is a flowchart showing a method for presenting ticket information according to an exemplary embodiment.
Fig. 2B is a schematic diagram showing presentation of relevant information according to an exemplary embodiment.
Fig. 3A is a flowchart showing a method for presenting ticket information according to an exemplary embodiment.
Fig. 3B is a flowchart showing how to determine an e-commerce platform according to an exemplary embodiment.
Fig. 3C is a flowchart showing how to determine an e-commerce platform according to an exemplary embodiment.
Fig. 4 is a flowchart showing a method for presenting ticket information according to an exemplary embodiment.
Fig. 5 is a block diagram showing a device for presenting ticket information according to an exemplary embodiment.
Fig. 6 is a block diagram showing a device for presenting ticket information according to an exemplary embodiment.
Fig. 7 is a block diagram showing a device for presenting ticket information according to an exemplary embodiment.
Fig. 8 is a block diagram showing a device for presenting ticket information according to an exemplary embodiment.
Fig. 9 is a block diagram showing a structure applicable for a device for presenting ticket information according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

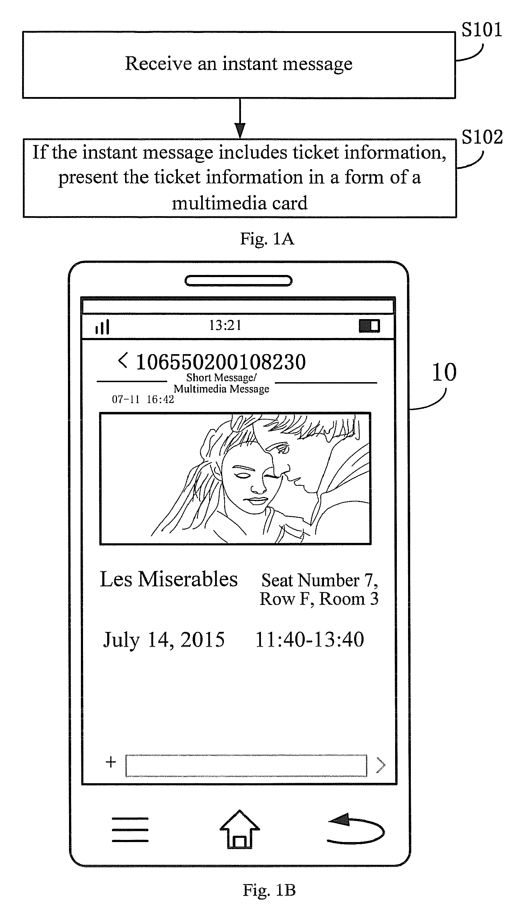

Fig. 1A is a flowchart showing a method for presenting ticket information according to an exemplary embodiment, and Fig. 1B is a schematic diagram showing a multimedia card according to an exemplary embodiment. The method for presenting ticket information may be applied in a terminal device such as a smart phone or a tablet computer, and may be implemented as applications installed on the terminal device. As shown in Fig. 1A, the method for presenting ticket information may include the following steps S101-S102.

In step S101, an instant message is received. The instant message may be received by a terminal device 10 or a server.

In step S102, when the instant message includes ticket information, the ticket information is presented in the form of a multimedia card.

In an embodiment, the ticket information may include admission tickets having timeliness and allowing entrance to particular places such as movie tickets, theater tickets, concert tickets, landmark tickets and the like.

In an embodiment, an e-commerce platform providing the ticket information may be determined from the instant message received by the terminal device, a short message template corresponding to the e-commerce platform may be determined from a template database, and whether there is ticket information in the instant message may be determined according to the short message template. For example, the e-commerce platform is an online group shopping website with the name of AAA, a user purchases a movie ticket for a movie with the name of Les Miserables on the online group shopping website, and then "AAA" may be identified from the instant message, and whether there is ticket information in the instant message may be determined by the short message template corresponding to "AAA". For example, the contents of a short message sent from the e-commerce platform are as follows: "AAA group shopping: ticket information: July 14, 2015, Les Miserables, Broadway Cinematheque, Seat number 7, Row F, Room 3". Thus, the AAA e-commerce platform may be identified by "AAA group shopping" in the instant message, the short message template corresponding to the AAA e-commerce platform may be determined, and thus according to the style of the short message template, the terminal device may identify that the instant message relates to a movie ticket booked on the e-commerce platform by the user, and the name of the movie is Les Miserables.

In another embodiment, a second keyword representing the ticket information is determined from the instant message; whether the second keyword is stored in a second database is determined, wherein the second database is configured to record keywords included in ticket information; and if the second keyword is stored in the second database, it is determined that the instant message includes the ticket information. The second keyword may be "movie ticke", "ticket release", or "go to the movie theater on time" and the like. When a keyword such as "movie ticket" is identified from the instant message, it can be determined that ticket information is included in the instant message. In an embodiment, because the second database may be continuously updated with the changes of keywords representing ticket information, the accuracy of keywords identifying can be ensured.

In an embodiment, templates of multimedia cards with different styles may be stored in a storage module, and thus different types of multimedia cards may be set by users according to their preferences. As shown in Fig. 1B, after determining the movie name (i.e., Les Miserables), showtime and seat information in the ticket information, the poster, the showtime and seat information of the movie (i.e., Les Miserables) may be presented on the terminal device 10 in the form of a multimedia card.

In the embodiment, if a received instant message includes ticket information, the ticket information is presented in the form of a multimedia card. Thus, the ticket information is presented visually, the presentation of ticket information becomes more colorful and the presentation of instant message is more diversifying. Consequently, users can enjoy visual beauty.

In an embodiment, presenting the ticket information in the form of a multimedia card may include:
searching a poster relating to the ticket information via a network interface;
determining a ticket title and seat information in the ticket information which is included in the instant message; and
presenting the poster, the ticket title and the seat information on a short message list in the form of the multimedia card.

In an embodiment, the method may further include:
monitoring whether there is a trigger event on the multimedia card;
if the trigger event is monitored, searching relevant information to the ticket information via a network interface; and
presenting the relevant information on the multimedia card.

In an embodiment, the method may further include:
determining an e-commerce platform providing the ticket information from the instant message;
determining a short message template corresponding to the e-commerce platform from a template database, wherein the template database is configured to record short message templates of e-commerce platforms providing ticket information; and
determining whether there is the ticket information in the instant message according to the short message template.

In an embodiment, determining an e-commerce platform providing the ticket information from the instant message may include:
determining a first keyword in the instant message;
determining whether the first keyword is stored in a first database, wherein the first database is configured to record enterprise names corresponding to keywords; and
if the first keyword is stored in the first database, determining an enterprise name recorded in the first database which is consistent with the first keyword as the e-commerce platform providing the ticket information.

In an embodiment, determining an e-commerce platform providing the ticket information from the instant message may include:
determining a short message number sending the instant message;
determining whether the short message number is stored in a number database, wherein the number database is configured to record fixed numbers of enterprises and enterprise names corresponding to the fixed numbers; and
if the short message number is stored in the number database, determining the e-commerce platform providing the ticket information in accordance with an enterprise name recorded in the number database which is corresponding to the short message number.

In an embodiment, the method may further include:
determining whether there is a short message template corresponding to the e-commerce platform stored in the template database;
if there is a short message template corresponding to the e-commerce platform stored in the template database, performing determining of the short message template corresponding to the e-commerce platform from the template database; and
if there is no short message template corresponding to the e-commerce platform stored in the template database, updating the short message template corresponding to the e-commerce platform into the template database.

In an embodiment, the method may further include:
determining a second keyword representing the ticket information from the instant message;
determining whether the second keyword is stored in a second database, wherein the second database is configured to record keywords included in ticket information; and
if the second keyword is stored in the second database, determining that the instant message includes the ticket information.

How to present the ticket information in the instant message is explained below with reference to the following embodiments.

In view of the above, in the method provided by embodiments of the present disclosure, the ticket information is presented visually, the presentation of ticket information becomes more colorful and the presentation of instant message is more diversifying. Consequently, users can enjoy visual beauty.

The technical solutions provided by the embodiments of the present disclosure will be explained below by specific embodiments.

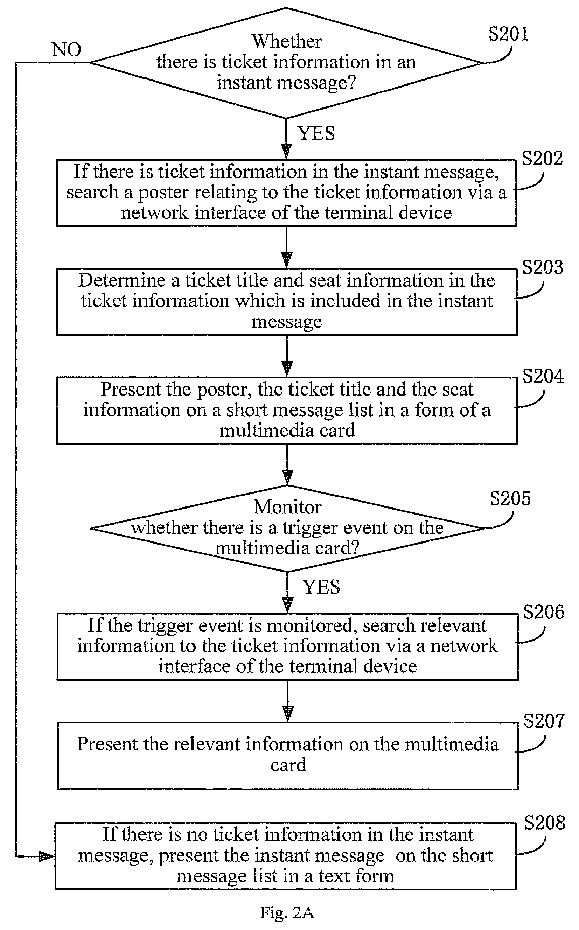

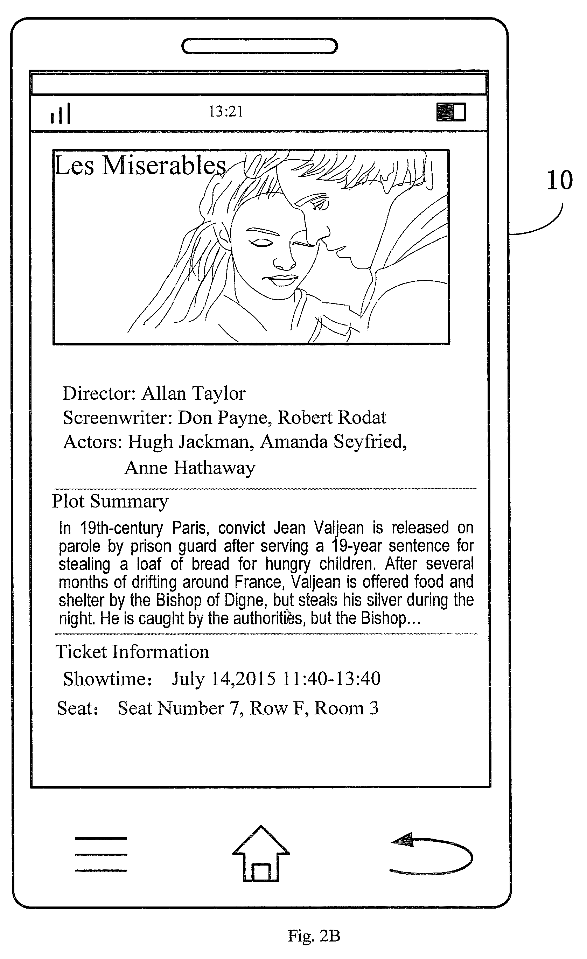

Fig. 2A is a flowchart showing a method for presenting ticket information according to an exemplary embodiment, and Fig. 2B is a schematic diagram showing presentation of relevant information according to an exemplary embodiment. In the embodiment, how to present ticket information on a multimedia card is illustrated with reference to Fig. 1B. As shown in Fig. 2A, the method includes the following steps.

In step S201, whether there is ticket information in an instant message received by a terminal device is determined. The instant message comes from an e-commerce platform providing the ticket information. If there is ticket information in the instant message, step S202 is performed. If there is no ticket information in the instant message, step S208 is performed.

For description of step S201, refer to the above description regarding step S101, and repeated descriptions are omitted here.

In step S202, if there is ticket information in the instant message, a poster relating to the ticket information is searched via a network interface of the terminal device.

In an embodiment, the network interface of the terminal device may be a 3G 4G network interface, or a WIFI network interface as long as the terminal device may access the Internet via the network interface to obtain the poster of the ticket information, and the present disclosure does not impose limitations on the type of the network interface. In an embodiment, the ticket information is for example a movie ticket, and the poster of the movie may be a picture produced by the movie producer for promoting the movie, as shown in Fig. 1B. Users may know that the movie is Les Miserables when seeing the picture.

In step S203, a ticket title and seat information in the ticket information which is included in the instant message are determined.

In an embodiment, the ticket title and seat information in the ticket information which is included in the instant message may be determined by a short message template. For detailed description, refer to the above description regarding step S102.

In step S204, the poster, the ticket title and the seat information are presented on a short message list in the form of a multimedia card.

As shown in Fig. 1B, the poster of the movie, the ticket title (i.e., "Les Miserables") and corresponding seat information (i.e., Seat number 7, Row F, Room 3) and showtime of the movie are presented on the multimedia card. Thus, users can view instant messages from the e-commerce platform visually by the multimedia card.

In step S205, whether there is a trigger event on the multimedia card is monitored.

In step S206, if the trigger event is monitored, relevant information to the ticket information is searched via a network interface of the terminal device. In an embodiment of the present disclosure, if no trigger event is found, continue to monitor.

In step S207, the relevant information is presented on the multimedia card.

In steps S205 to S207, according to an embodiment, the multimedia card may be set as having a clickable property, and tapping (or clicking) on the multimedia card may trigger the terminal device to search the relevant information to the ticket title via the network interface. After the relevant information is found, the current page of the multimedia card jumps to a page for the relevant information. In an embodiment, as shown in Fig. 2B, the relevant information may include information relating to the movie such as scores for the movie, information of cast members (for example, the director, the screenwriter and the stars), and information relating to the ticket such as the showtime, the seat number, the address and the like.

In step S208, if there is no ticket information in the instant message, the instant message is presented on the short message list in a text form.

In addition to the above-mentioned advantageous technical effects, the embodiment has the following additional effects:
After monitoring a trigger event, relevant information to the ticket information is searched via a network interface of the terminal device, and the relevant information is presented on the multimedia card. In this way, more useful contents are presented on the multimedia card. Thus, a user may know some necessary information relevant to the ticket information in advance, the user does not need to get the relevant information by manual searching on network and thereby user experience is improved.

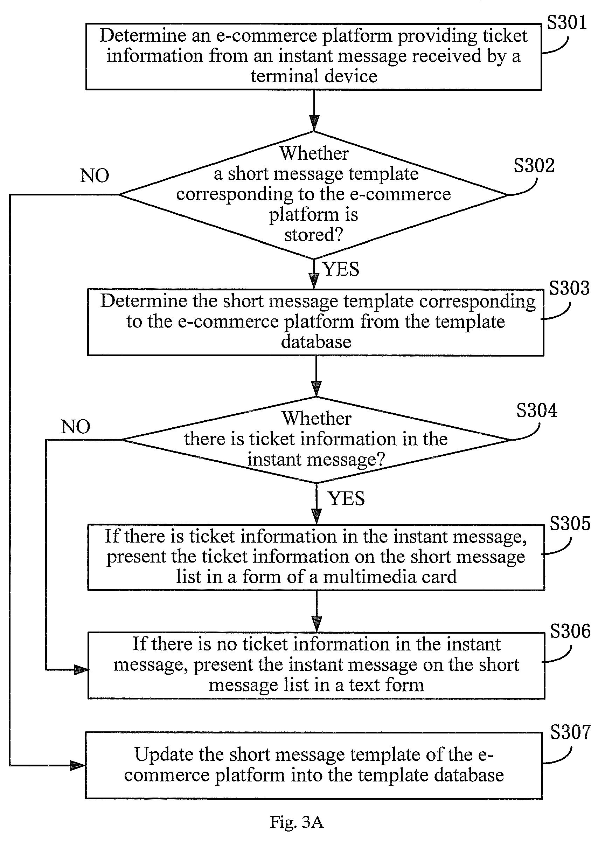

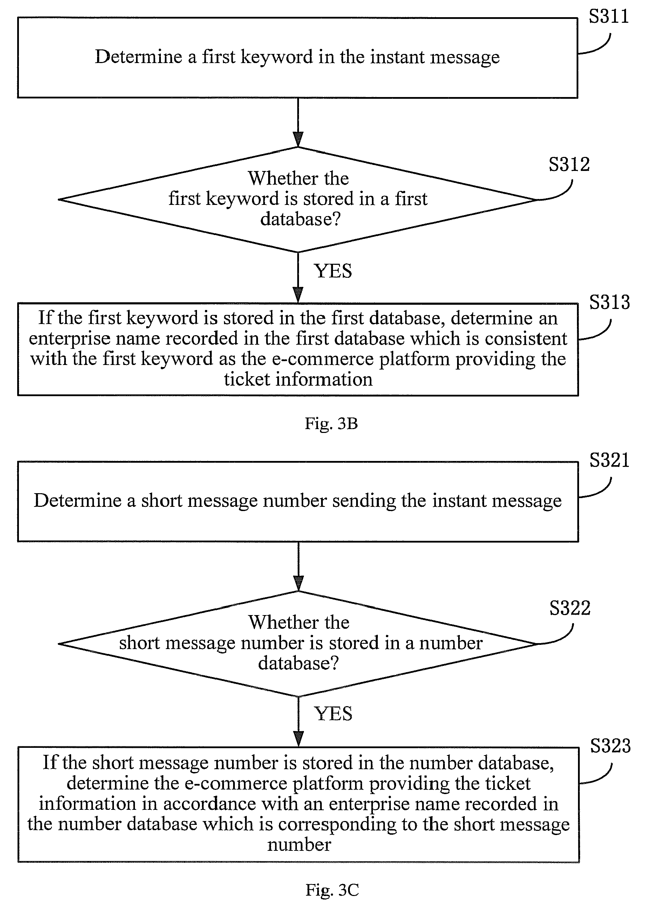

Fig. 3A is a flowchart showing a method for presenting ticket information according to an exemplary embodiment, Fig. 3B is a flowchart showing how to determine an e-commerce platform according to an exemplary embodiment, and Fig. 3C is a flowchart showing how to determine an-ecommerce platform according to another exemplary embodiment. In the embodiment, how to determine whether there is ticket information in an instant message is illustrated with reference to Fig. 1B. As shown in Fig. 3A, the method includes the following steps.
In step S301, an e-commerce platform providing ticket information is determined from an instant message received by a terminal device.
   In an embodiment, the name of the e-commerce platform may be determined from the instant message by semantic identifying. In another embodiment, the name of the e-commerce platform may be determined from the instant message by word matching. For example, the names of a plurality of e-commerce platforms providing ticket information may be recorded into a platform list, the instant message is matched with the names in the platform list so as to determine the name of the e-commerce platform from the instant message. For example, the name of the e-commerce platform is AAA. Refer to the description regarding Figs. 3B and 3C for details about how to determine the e-commerce platform providing ticket information from the instant message in step S301.
In step S302, whether a short message template corresponding to the e-commerce platform is stored in a template database is determined. If the short message template corresponding to the e-commerce platform is stored in the template database, step S303 is performed. If the short message template corresponding to the e-commerce platform is not stored in the template database, step S307 is performed.
In step S303, the short message template corresponding to the e-commerce platform is determined from the template database. The template database is configured to record short message templates of e-commerce platforms providing ticket information.
In step S304, whether there is ticket information in the instant message is determined according to the short message template. If there is ticket information in the instant message, step S305 is performed; if there is no ticket information in the instant message, step S306 is performed.
   In an embodiment, different e-commerce platforms may employ different short message templates to provide short message notification services for users. By making statistics on short message templates corresponding to different e-commerce platforms and storing the short message templates in the template database, the identifying of the instant message becomes more accurate. For example, the e-commerce platform is an online group shopping website with the name of AAA and employs a short message template as follows: "AAA online group shopping: ticket information: time, name, address, seat number". By identifying corresponding parts in the instant message according to the short message template, whether there is ticket information in the instant message may be determined.
In step S305, if there is ticket information in the instant message, the ticket information is presented on the short message list in the form of a multimedia card.
   For description of step S305, refer to the above description regarding S102, and repeated descriptions are omitted here.
In step S306, if there is no ticket information in the instant message, the instant message is presented on the short message list in a text form.
In step S307, the short message template of the e-commerce platform is updated into the template database.

In an embodiment, the terminal device may send a server an update request in which the name of the e-commerce platform is carried. After receiving the update request, the server sends the short message template of the e-commerce platform to the terminal device, and the terminal device updates the short message template into the template database. Thus, manual updating of the short message template by user is avoided, and thus user experience is improved. In another embodiment, a user may edit and modify a short message template on a terminal device, and the short message template may be updated into the template database. Thus, the load of the terminal device and network side load of the server can be reduced. In an embodiment, the template database may be constructed and maintained by the online retailers providing the server.

As shown in Fig. 3B, keywords in the instant message may be used to determine the e-commerce platform. Specifically, the following steps may be included.
In step S311, a first keyword in the instant message is determined.
In step S312, whether the first keyword is stored in a first database is determined. The first database is configured to record enterprise names corresponding to keywords.
In step S313, if the first keyword is stored in the first database, an enterprise name recorded in the first database which is consistent with the first keyword is determined as the e-commerce platform providing the ticket information. In an embodiment of the present disclosure, if no first keyword is stored in the first database, no process is performed. For example, the instant message may be presented in a usual form such as a text form.

In an embodiment, different e-commerce platforms may have different enterprise names. The enterprise names of the e-commerce platforms may be recorded and stored in the first database, and then the e-commerce platform sending the instant message may be identified by the first keyword. If the first database is updated continuously, the identifying of the first keyword becomes more accurate. For example, the first keyword identified from the instant message is AAA, and if there is AAA corresponding to the first keyword or AAA1 representing the same e-commerce platform as AAA stored in the first database, the e-commerce platform providing the ticket information may be determined as AAA.

As shown in Fig. 3C, the e-commerce platform may be determined by a short message number sending the instant message. Specifically, the following steps may be included.
In step S321, a short message number sending the instant message is determined.
In step S322, whether the short message number is stored in a number database is determined, wherein the number database is configured to record fixed numbers of enterprises and enterprise names corresponding to the fixed numbers.
In step S323, if the short message number is stored in the number database, the e-commerce platform providing the ticket information is determined in accordance with an enterprise name recorded in the number database which is corresponding to the short message number. In an embodiment of the present disclosure, if no short message number is stored in the number database, no process is performed. For example, the instant message may be presented in a usual form such as a text form.

In an embodiment, different e-commerce platforms send instant messages by different short message numbers. By recording short message numbers corresponding to e-commerce platforms and storing the short message number in the number database, the e-commerce platform sending the instant message can be identified by the short message number. Because the number database is continuously updated according to the short message numbers of enterprises, the number database can ensure more accurate identifying of the short message number. For example, the short message number identified from the instant message is 10690899124114. If an e-commerce platform corresponding to 10690899124114 is stored in the number database, and the e-commerce platform is AAA, it can be determined that the e-commerce platform providing the ticket information is AAA.

In addition to the above-mentioned advantageous technical effects, the embodiment has the following additional effects. By determining the short message template corresponding to the e-commerce platform from the template database, and determining whether there is ticket information in the instant message according to the short message template, the identifying of the instant message becomes more targeted, and the accuracy for identifying instant messages is improved. Further, by updating the short message template database in time, the terminal device can more accurately and comprehensively identify instant messages.

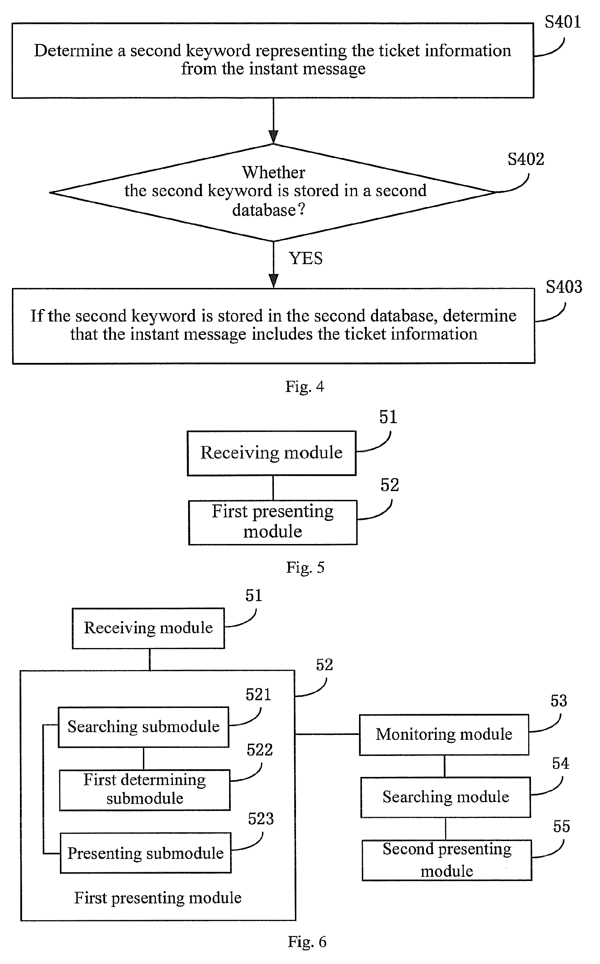

Fig. 4 is a flowchart showing a method for presenting ticket information according to an exemplary embodiment. In the embodiment, how to determine whether there is ticket information in the instant message is illustrated. As shown in Fig. 4, the following steps are included.
In step S401, a second keyword representing the ticket information is determined from the instant message.
In step S402, whether the second keyword is stored in a second database is determined. The second database is configured to record keywords included in ticket information.
In step S403, if the second keyword is stored in the second database, it is determined that the instant message includes the ticket information. In an embodiment of the present disclosure, if no second keyword is stored in the second database, no process is performed. For example, the instant message may be presented in a usual form such as a text form.

In an embodiment, the second keyword in the instant message may be identified by semantic identifying. For example, semantic matching between the second keyword and the keywords in the second database is performed; if the matching is successful, the second keyword is stored in the second database, and thus it can be determined that the instant message includes the ticket information. Because the second database can be continuously updated according to the keywords representing ticket information, determining whether the ticket information is included according to the second database can ensure more accurate identifying of the keywords. For example, "movie ticket" is identified from an instant message by semantic identifying, and semantic matching between the "movie ticket" in the instant message and the keywords in the second database can be performed; if there is the keyword "movie ticket" stored in the second database, it can be determined that the instant message includes ticket information. Similarly, if keywords such as "ticket release", or "go to the movie theater on time" are identified from the instant message, and these keywords can be found in the second database, it can be determined that the instant message includes the ticket information.

In the embodiment, whether the instant message includes the ticket information is determined by the second database. Because the second database can be continuously updated according to keywords representing ticket information, determining whether the ticket information is included by the second database can ensure more accurate and efficient identifying of keywords.

Fig. 5 is a block diagram showing a device for presenting ticket information according to an exemplary embodiment. As shown in Fig. 5, the device for presenting ticket information includes a receiving module 51 and a first presenting module 52.

The receiving module 51 is configured to receive an instant message.

The first presenting module 52 is configured to, if the instant message received by the receiving module 51 includes ticket information, present the ticket information in the form of a multimedia card.

Fig. 6 is a block diagram showing a device for presenting ticket information according to an exemplary embodiment. As shown in Fig. 6, on the basis of the embodiment as shown in Fig. 5, the first presenting module 52 in the embodiment may include a searching submodule 521, a first determining submodule 522 and a presenting submodule 523.

The searching submodule 521 is configured to search a poster relating to the ticket information via a network interface.

The first determining submodule 522 is configured to determine a ticket title and seat information in the ticket information which is included in the instant message.

The presenting submodule 523 is configured to present the poster found by the searching submodule 521, the ticket title and the seat information determined by the first determining submodule 522 on a short message list in the form of the multimedia card.

In an embodiment, the device may further include a monitoring module 53, a searching module 54 and a second presenting module 55.

The monitoring module 53 is configured to monitor whether there is a trigger event on the multimedia card presented by the first presenting module 52.

The searching module 54 is configured to, if the trigger event is monitored by the monitoring module 53, search relevant information to the ticket information via a network interface.

The second presenting module 55 is configured to present the relevant information found by the searching module 54 on the multimedia card.

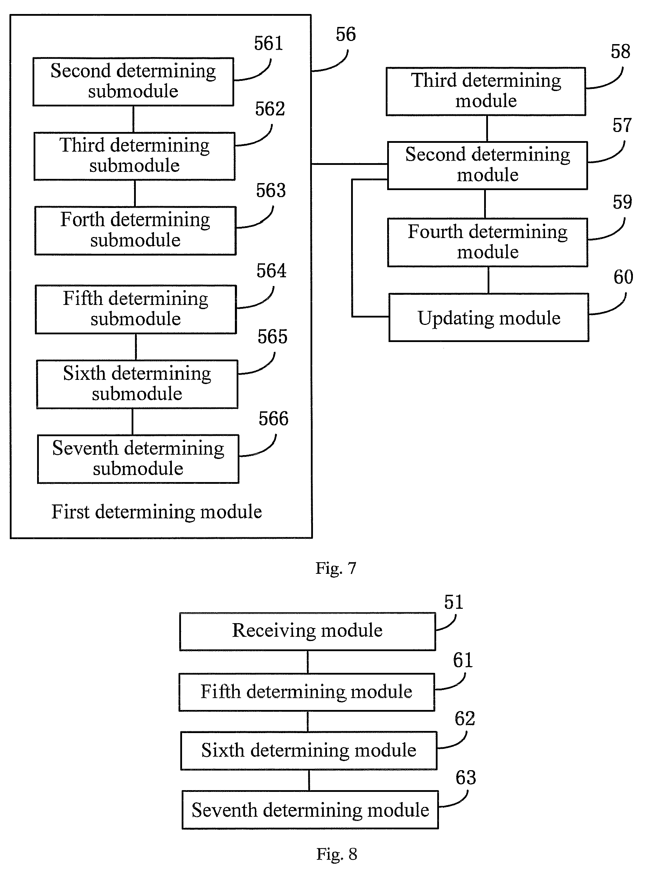

Fig. 7 is a block diagram showing a device for presenting ticket information according to an exemplary embodiment. As shown in Fig. 7, on the basis of the embodiment as shown in Fig. 5 or 6, the device in the embodiment may further include a first determining module 56, a second determining module 57 and a third determining module 58.

The first determining module 56 is configured to determine an e-commerce platform providing the ticket information from the instant message received by the receiving module 51.

The second determining module 57 is configured to determine a short message template corresponding to the e-commerce platform determined by the first determining module 56 from a template database, wherein the template database is configured to record short message templates of e-commerce platforms providing ticket information.

The third determining module 58 is configured to determine whether there is the ticket information in the instant message according to the short message template determined by the second determining module 57.

In an embodiment, the first determining module 56 may include a second determining submodule 561, a third determining submodule 562 and a fourth determining submodule 563.

The second determining submodule 561 is configured to determine a first keyword in the instant message.

The third determining submodule 562 is configured to determine whether the first keyword determined by the second determining submodule 561 is stored in a first database, wherein the first database is configured to record enterprise names corresponding to keywords.

The fourth determining submodule 563 is configured to, if the third determining submodule 562 determines that the first keyword is stored in the first database, determine an enterprise name recorded in the first database which is consistent with the first keyword as the e-commerce platform providing the ticket information.

In an embodiment, the first determining module 56 may include a fifth determining submodule 564, a sixth determining submodule 565, a seventh determining submodule 566.

The fifth determining submodule 564 is configured to determine a short message number sending the instant message.

The sixth determining submodule 565 is configured to determine whether the short message number determined by the fifth determining submodule 564 is stored in a number database, wherein the number database is configured to record fixed numbers of enterprises and enterprise names corresponding to the fixed numbers.

The seventh determining submodule 566 is configured to, if the sixth determining submodule 565 determines that the short message number is stored in the number database, determine the e-commerce platform providing the ticket information in accordance with an enterprise name recorded in the number database which is corresponding to the short message number.

In an embodiment, the device may further include a fourth determining module 59 and an updating module 60.

The fourth determining module 59 is configured to determine whether there is a short message template corresponding to the e-commerce platform stored in the template database.

If the fourth determining module 59 determines that there is a short message template corresponding to the e-commerce platform stored in the template database, the second determining module 57 performs determining of the short message template corresponding to the e-commerce platform from the template database.

The updating module 60 is configured to, if the fourth determining module 59 determines that there is no short message template corresponding to the e-commerce platform stored in the template database, update the short message template corresponding to the e-commerce platform into the template database, so that the second determining module 57 determines the short message template corresponding to the e-commerce platform determined by the first determining module 56 from the updated template database.

Fig. 8 is a block diagram showing a device for presenting ticket information according to an exemplary embodiment. As shown in Fig. 8, on the basis of the embodiment as shown in Fig. 5, 6 or 7, the device in the embodiment may further include a fifth determining module 61, a sixth determining module 62, and a seventh determining module 63.

The fifth determining module 61 is configured to determine a second keyword representing the ticket information from the instant message received by the receiving module 51.

The sixth determining module 62 is configured to determine whether the second keyword determined by the fifth determining module 61 is stored in a second database, wherein the second database is configured to record keywords included in ticket information.

The seventh determining module 63 is configured to, if the sixth determining module 62 determines that the second keyword is stored in the second database, determine that the instant message includes the ticket information.

With respect to the devices in the above embodiments, the specific manners for performing operations for individual modules therein have been described in detail in the embodiments regarding the methods for presenting ticket information, which will not be elaborated herein.

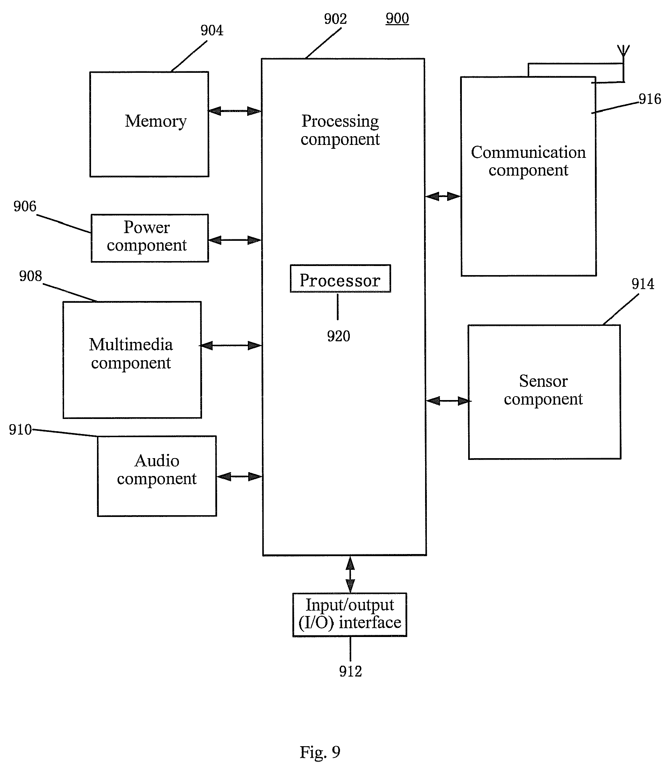

Fig. 9 is a block diagram showing a structure applicable in a device for presenting ticket information according to an exemplary embodiment. For example, the device 900 may be a mobile phone, a computer, a digital broadcast terminal, a messaging device, a gaming console, a tablet, a medical device, exercise equipment, a personal digital assistant, and the like.

Referring to Fig. 9, the device 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the device 900, such as the operations associated with display, telephone calls, data communications, camera operations, and recording operations. The processing component 902 may include one or more processors 920 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the device 900. Examples of such data include instructions for any applications or methods operated on the device 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the device 900. The power component 906 may include a power management system, one or more power sources, and any other components associated with the generation, management, and distribution of power in the device 900.

The multimedia component 908 includes a screen providing an output interface between the device 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and the rear camera may receive an external multimedia datum while the device 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone ("MIC") configured to receive an external audio signal when the device 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the device 900. For instance, the sensor component 914 may detect an open/closed status of the device 900, relative positioning of components, e.g., the display and the keypad, of the device 900, a change in position of the device 900 or a component of the device 900, a presence or absence of user contact with the device 900, an orientation or an acceleration/deceleration of the device 900, and a change in temperature of the device 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the device 900 and other devices. The device 900 can access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 904, executable by the processor 920 in the device 900, for performing the above-described methods. For example, the non-transitory computer-readable storage medium may be a ROM, a RAM, a CD-ROM, a magnetic tape, a floppy disc, an optical data storage device, and the like.

## Claims

1. A method for presenting ticket information, comprising:
receiving (S101) an instant message; and
if the instant message comprises ticket information, presenting (S102) the ticket information in the form of a multimedia card.

2. The method according to claim 1, wherein presenting (S102) the ticket information in the form of a multimedia card comprises:
searching (S202) a poster relating to the ticket information via a network interface;
determining (S203) a ticket title and seat information in the ticket information which is comprised in the instant message; and
presenting (S204) the poster, the ticket title and the seat information on a short message list in the form of the multimedia card.

3. The method according to claim 1, further comprising:
monitoring (S205) whether there is a trigger event on the multimedia card;
if the trigger event is monitored, searching (S206) relevant information to the ticket information via a network interface; and
presenting (S207) the relevant information on the multimedia card.

4. The method according to claim 1, further comprising:
determining (S301) an e-commerce platform providing the ticket information from the instant message;
determining (S303) a short message template corresponding to the e-commerce platform from a template database, wherein the template database is configured to record short message templates of e-commerce platforms providing ticket information; and
determining (S304) whether there is the ticket information in the instant message according to the short message template.

5. The method according to claim 4, wherein determining (S301) an e-commerce platform providing the ticket information from the instant message comprises:
determining (S311) a first keyword in the instant message;
determining (S312) whether the first keyword is stored in a first database, wherein the first database is configured to record enterprise names corresponding to keywords; and
if the first keyword is stored in the first database, determining (S313) an enterprise name recorded in the first database which is consistent with the first keyword as the e-commerce platform providing the ticket information.

6. The method according to claim 4, wherein determining (S301) an e-commerce platform providing the ticket information from the instant message comprises:
determining (S321) a short message number sending the instant message;
determining (S322) whether the short message number is stored in a number database, wherein the number database is configured to record fixed numbers of enterprises and enterprise names corresponding to the fixed numbers; and
if the short message number is stored in the number database, determining (S323) the e-commerce platform providing the ticket information in accordance with an enterprise name recorded in the number database which is corresponding to the short message number.

7. The method according to claim 4, further comprising:
determining (S302) whether there is a short message template corresponding to the e-commerce platform stored in the template database;
if there is a short message template corresponding to the e-commerce platform stored in the template database, performing determining (S303) of the short message template corresponding to the e-commerce platform from the template database; and
if there is no short message template corresponding to the e-commerce platform stored in the template database, updating (S307) the short message template corresponding to the e-commerce platform into the template database.

8. The method according to claim 1, further comprising:
determining (S401) a second keyword representing the ticket information from the instant message;
determining (S402) whether the second keyword is stored in a second database, wherein the second database is configured to record keywords comprised in ticket information; and
if the second keyword is stored in the second database, determining (S403) that the instant message comprises the ticket information.

9. A device for presenting ticket information, comprising:
a receiving module (51) configured to receive an instant message; and
a first presenting module (52) configured to, if the instant message received by the receiving module (51) comprises ticket information, present the ticket information in the form of a multimedia card.

10. The device according to claim 9, wherein the first presenting module (52) comprises:
a searching submodule (521) configured to search a poster relating to the ticket information via a network interface;
a first determining submodule (522) configured to determine a ticket title and seat information in the ticket information which is comprised in the instant message; and
a presenting submodule (523) configured to present the poster found by the searching submodule, the ticket title and the seat information determined by the first determining submodule (522) on a short message list in the form of the multimedia card.

11. The device according to claim 9, further comprising:
a monitoring module (53) configured to monitor whether there is a trigger event on the multimedia card presented by the first presenting module (52);
a searching module (54) configured to, if the trigger event is monitored by the monitoring module, search relevant information to the ticket information via a network interface; and
a second presenting module (55) configured to present the relevant information found by the searching module (54) on the multimedia card.

12. The device according to claim 9, further comprising:
a first determining module (56) configured to determine an e-commerce platform providing the ticket information from the instant message received by the receiving module (51);
a second determining module (57) configured to determine a short message template corresponding to the e-commerce platform determined by the first determining module (56) from a template database, wherein the template database is configured to record short message templates of e-commerce platforms providing ticket information; and
a third determining module (58) configured to determine whether there is the ticket information in the instant message according to the short message template determined by the second determining module (57).

13. The device according to claim 12, wherein the first determining module (56) comprises:
a second determining submodule (561) configured to determine a first keyword in the instant message;
a third determining submodule (562) configured to determine whether the first keyword determined by the second determining submodule is stored in a first database, wherein the first database is configured to record enterprise names corresponding to keywords; and
a forth determining submodule (563) configured to, if the third determining submodule (562) determines that the first keyword is stored in the first database, determine an enterprise name recorded in the first database which is consistent with the first keyword as the e-commerce platform providing the ticket information.

14. The device according to claim 12, wherein the first determining module (56) comprises:
a fifth determining submodule (564) configured to determine a short message number sending the instant message;
a sixth determining submodule (565) configured to determine whether the short message number determined by the fifth determining submodule (564) is stored in a number database, wherein the number database is configured to record fixed numbers of enterprises and enterprise names corresponding to the fixed numbers; and
a seventh determining submodule (566) configured to, if the sixth determining submodule determines that the short message number is stored in the number database, determine the e-commerce platform providing the ticket information in accordance with an enterprise name recorded in the number database which is corresponding to the short message number.

15. The device according to claim 12, further comprising:
a fourth determining module (59) configured to determine whether there is a short message template corresponding to the e-commerce platform stored in the template database;
wherein if the fourth determining module (59) determines that there is a short message template corresponding to the e-commerce platform stored in the template database, the second determining module (57) performs determining of the short message template corresponding to the e-commerce platform from the template database; and
an updating module (60) configured to, if the fourth determining module determines that there is no short message template corresponding to the e-commerce platform stored in the template database, update the short message template corresponding to the e-commerce platform into the template database.

16. The device according to claim 9, further comprising:
a fifth determining module (61) configured to determine a second keyword representing the ticket information from the instant message;
a sixth determining module (62) configured to determine whether the second keyword determined by the fifth determining module (61) is stored in a second database, wherein the second database is configured to record keywords comprised in ticket information; and
a seventh determining module (63) configured to, if the sixth determining module determines that the second keyword is stored in the second database, determine that the instant message comprises the ticket information.

17. A device (900) for presenting ticket information, comprising:
a processor (902); and
a memory (904) for storing instructions executable by the processor;
wherein the processor is configured to:
receive an instant message; and
if the instant message comprises ticket information, present the ticket information in the form of a multimedia card.

18. A computer program, including instructions for executing the steps of a method according to any one of claims 1 to 8 when said program is executed by a computer.
